(19) **Europäisches Patentamt European Patent Office Office européen des brevets**

(11) **EP 2 251 972 B1**

(12) **EUROPEAN PATENT SPECIFICATION**

(45) Date of publication and mention
of the grant of the patent:
**02.07.2014 Bulletin 2014/27**

(51) Int Cl.:
*H02P 8/12* *(2006.01)*     *H02P 8/22* *(2006.01)*

(21) Application number: **10159984.3**

(22) Date of filing: **15.04.2010**

(54) **Method and hardware system for driving a stepper motor in feed-forward voltage mode**

Verfahren und Hardwaresystem zur Steuerung einem Schrittmotors in einen Spannungsvorwärstkopplungsmodus

Procédé et système hardware pour la commande d'un moteur pas à pas par une mode de manière en avale de tension

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.05.2009 IT VA20090031**

(43) Date of publication of application:
**17.11.2010 Bulletin 2010/46**

(73) Proprietors:
• **STMicroelectronics Srl**
**20864 Agrate Brianza (IT)**
• **Dora S.p.A.**
**11100 Aosta (IT)**

(72) Inventors:
• **Bagarelli, Fulvio Giacomo**
**26100, Cremona (IT)**
• **Marano, Vincenzo**
**20053, Muggiò (IT)**
• **Poli, Enrico**
**24027 Oslo Sotto (IT)**

(74) Representative: **Pellegri, Alberto**
**Società Italiana Brevetti S.p.A.**
**Via Carducci, 8**
**20123 Milano (IT)**

(56) References cited:
**EP-A1- 0 736 961     US-A- 5 216 345**
**US-A- 6 150 789**

**Description**

TECHNICAL FIELD

This invention relates to techniques for driving electric motors and more particularly to a method and a related hardware system for driving a stepper motor in feed-forward voltage mode.

BACKGROUND

Stepper motors are electric motors that move by increments, or steps, rather than turning smoothly as conventional electric motors.

When the windings of a stepper motor are energized, magnetic fields are generated and the rotor of the stepper motor turns to a certain position and stays there unless or until different windings are energized.

The stepper motor is capable of withstanding an external torque applied to the shaft once the shaft has come to rest with current applied. This torque is typically called *holding torque.* The *holding torque* is maximum when the rotor and stator fields are orthogonal ($\beta$ = 90°) and in general it varies also depending from the position. This variation is caused by the *detent torque,* which adds and subtracts from the electrically induced torque when the shaft of the motor moves.

The difference between the produced torque and *detent torque* makes the motor rotate. In order to avoid missing step rotation, sufficient electrical current must be forced to overcome the *detent torque.* Loss of step rotation may result in a stall of the motor.

Typically, the so-called current mode driving is implemented for driving stepper motors. Examples of monolithic circuits functioning in current mode are the devices L6208 and L6228 of ST, A3977 of Allegro, TMC236 of Trinamic and TB62201 of Toshiba.

Most current mode control circuits use a PWM technique for regulating the phase current. For this reason, hereinafter reference will be made to the PWM driving mode, though the same considerations hold *mutatis mutandis* for an analog driving mode.

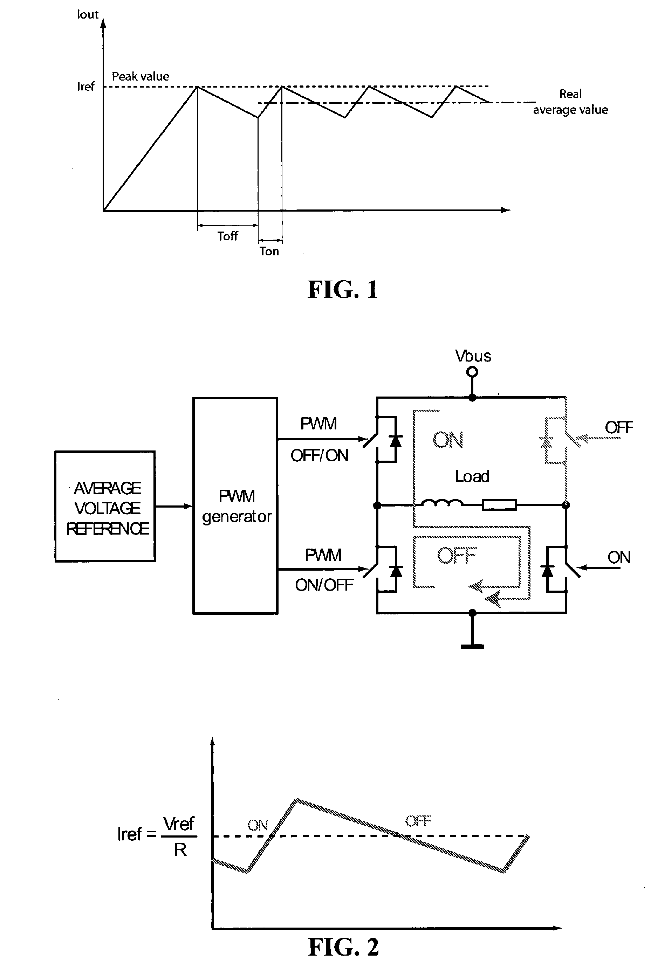

A common current mode driving technique limits the phase current to a reference peak value using a sense comparator. This type of control is also called "PWM peak current control" and is illustrated in FIG. 1. Typically, this control is affected by an error due to the current ripple, the amplitude of which is hardly controllable being affected by numerous factors such as the supply voltage of the power bridge, the phase current level, the PWM switching frequency and electrical parameters of the motor.

In PWM peak current control mode, only the peak current value (i.e. the peak torque value) is regulated, not its average value. Therefore, the unpredictable and non-negligible error introduced by the inevitable current ripple does not permit to implement a driving with a large number of micro-steps divisions, because the torque error could result larger than the separation between the micro-step reference values.

An alternative technique of driving brushless motors consists in adjusting the drive voltage of the motor in order to control the average voltage applied to the phase load instead of the maximum phase current.

This type of control can be implemented either by applying a continuous voltage or by PWM driving the power stage. In this case, when the motor is at rest or is moving very slowly (BEMF voltage is negligible), the average phase voltage is:

$$\overline{V}_{PHASE} = V_S \cdot D$$

where D is the duty cycle of the voltage applied to the motor phase and $V_S$ the voltage supply of the power stage. The average phase current is:

$$\bar{I}_{PHASE} = \frac{\overline{V}_{PHASE}}{R_S + R_L} = \frac{V_S \cdot D}{R_S + R_L} \cong \frac{V_S \cdot D}{R_L},$$

where $R_L$ is the load resistance and $R_S$ is the shunt resistor, if used.

In this way, the average phase current is regulated by regulating the PWM duty cycle of the power stage.

One of the main advantages of a voltage mode driving is that the driving system controls the average value of the phase current and not its peak value. In FIG. 2, a basic scheme of the architecture of a voltage mode driver is shown.

When the motor is running at high speed and the BEMF is no longer negligible, the phase currents have the same frequency and shape of the applied phase voltage and are outphased from the phase voltage by the load angle. The load angle represents the difference between stator magnetic field vector angle and rotor magnetic field vector angle and depends on the load torque, the holding torque and the speed.

The amplitude of the BEMF is equal to $k_E \cdot \omega_{EL}$, wherein $\omega_{EL}$ represents the electrical frequency and $k_E$ is the electric constant of the motor.

In voltage mode driving, the amplitude of the current does not have a fixed value but adapts by itself to the load condition when the *load torque* varies, in order to reach the equilibrium state. In voltage mode, the equation that ties the current $I_{eq}$ to the load torque is:

$$T_{load}(\alpha) \propto I_{eq}(\alpha) \cdot BEMF \cdot \cos(\alpha)$$

wherein $I_{eq}$ is the resultant value of the amplitude of the two phase currents, $\propto$ means "proportional to", $\alpha$ is equal to $\pi/2 - \beta$ and represents the angle between the BEMF voltage and the equivalent current.

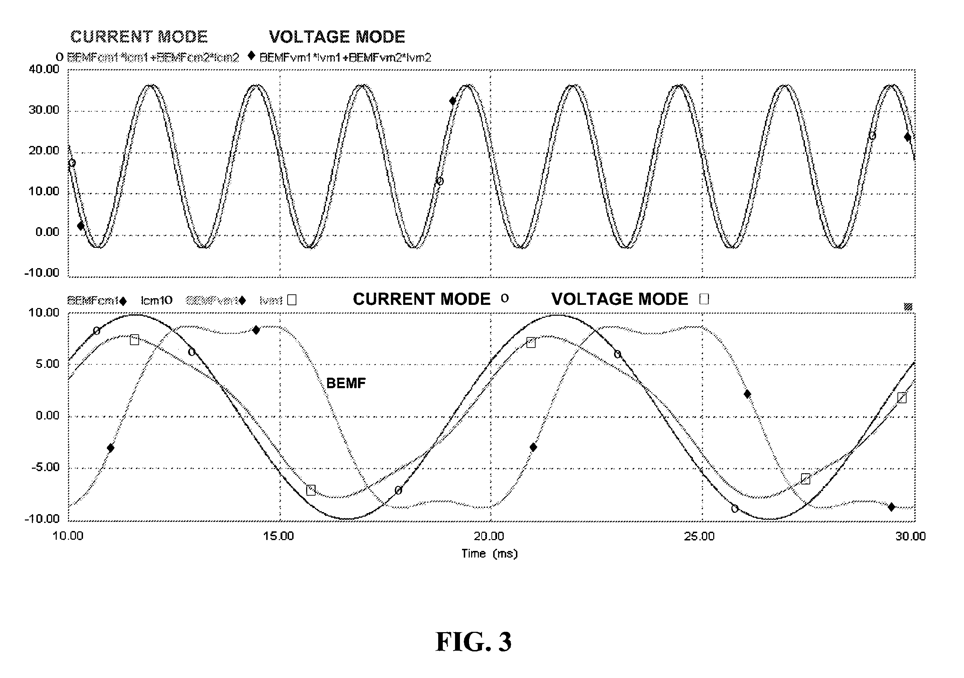

In FIG. 3 a time graph of the produced mechanical power (proportional to the produced torque) is shown.

Even if the phase current in voltage mode driving is not purely sinusoidal, as it is in current mode driving, the final produced torque is not more distorted, than for a sinusoidal phase current. The reason is that, if the BEMF as most often is the case is not sinusoidal because of a motor geometry far from being perfectly regular, then application of a purely sinusoidal phase current on the stator windings cannot ensure generation of a constant torque.

In addition, the peculiarity of a voltage mode driving to produce phase currents of constant amplitude makes more flexible the control and the torque uniformity is comparable to that obtained with current mode driving.

Stepper driving applications do not make use of voltage mode driving technique because of numerous significant drawbacks that limit the effective performances of such a driving approach.

A problem in voltage mode driving consists in the loss of the effective average produced torque, due the BEMF voltage, when the speed of the motor increases. Such uncontrolled decreasing of average produced torque may cause loss of steps and even the complete stall of the motor during acceleration. This issue is very likely in stepper motors, in which the electric constant $K_E$ is relatively large in respect to other types of motors, and thus relatively small speeds are sufficient to generate relatively large BEMF voltages that may lead to a loss of steps.

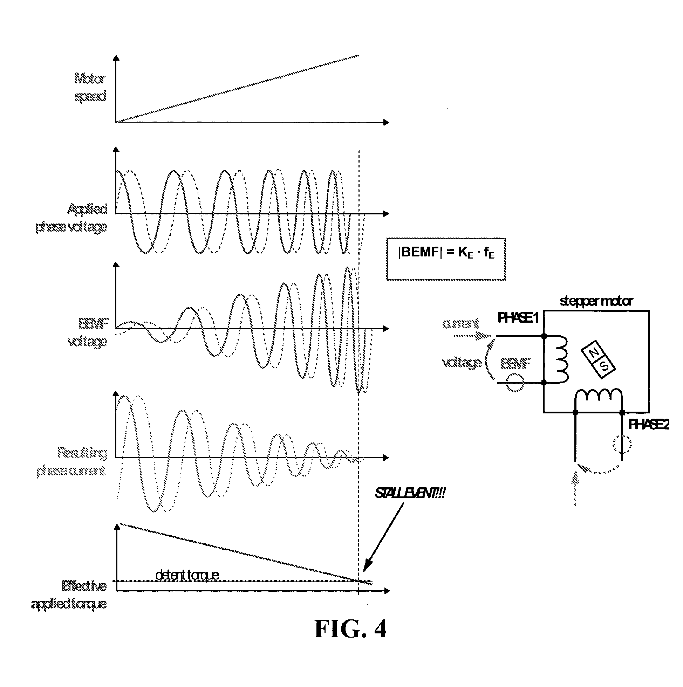

FIG. 4 represents the various electrical parameters of a stepper motor driven in voltage mode during a constant acceleration. The dashed curves are related to the other phases of the stepper motor. Following the traditional approach where the current ratio (but also the voltage ratio) must be equal to the tangent of the motor speed, the optimal voltage waveform to be applied on the two phases consists simply in two sinusoidal waveforms respectively outphased by 90° degrees, in order to obtain always the same produced torque with every rotor angle.

In terms of equivalent electrical circuit, the BEMF voltage can be represented by a sinusoidal voltage generator in series to the phase inductance, having amplitude proportional to the motor speed and a frequency equal to the motor speed. The phase of the BEMF depends on the load angle between the stator and rotor fields.

FIG. 4 shows that the increasing BEMF decreases the phase current and that the applied torque to the rotor decreases as the speed increases. The main problem of voltage mode approach is that the produced torque may decrease down to the detent torque value, thus causing the stepper motor to loose steps or completely stall.

In a stepper motor driven in voltage mode, the amplitude of the phase current is inversely proportional to the amplitude of the BEMF. Being the BEMF amplitude proportional to the rotational speed of the motor ( | BEMF | = $k_E\, f_{EL}$, where $f_{EL}$ is the electrical frequency of the motor in Hz), for a constant amplitude of the voltage applied to each phase winding, the amplitude of the phase current decreases when speed increases. This may cause a reduction of the produced torque which may be insufficient to overcome the detent torque and may lead to a stall condition.

In voltage mode control systems for brushless motors (BLDC), so-called *V/f* or *k·f* control technique is implemented for compensating the induced BEMF, but brushless and stepper motors are significantly different from each other:

- BLDC motor are mainly conceived for having good performances <u>while rotating:</u> they work at relatively high speed and the stator magnetic fluxes are controlled synchronously with the rotor position in order to adjust the load angle, maximizing the driving efficiency and reducing the torque ripple;

- stepper motors are mainly conceived for having good performances in <u>precisely assuming angular positions</u>: they work in a wide range of speeds (from fractions of step/second to thousands step/second) but their task is accurate positioning in a steady state, without missing steps. For fast positioning, they may be required to function at very high speed, with all the problems that generation of a large BEMF entails.

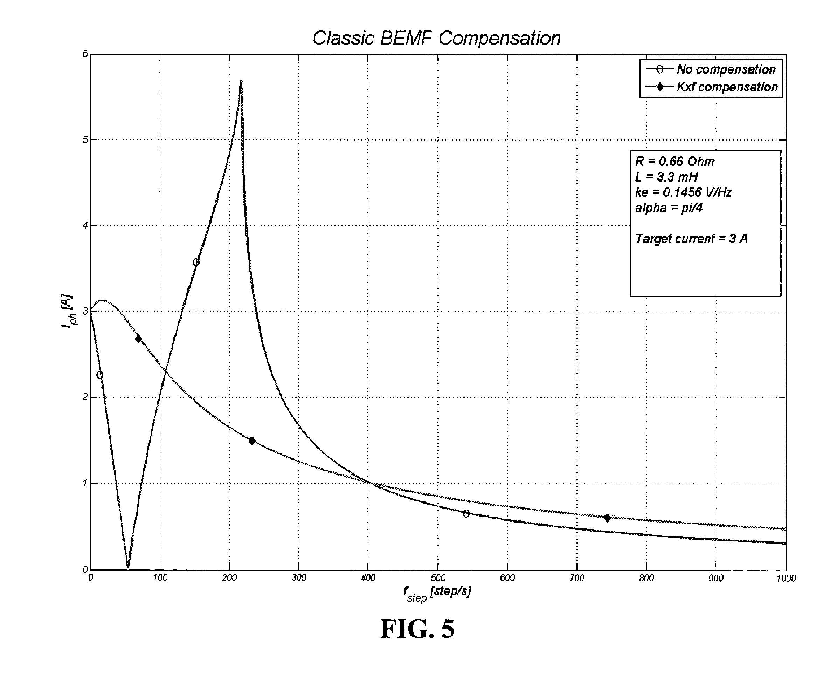

These differences make ineffective for a stepper motor the techniques of BEMF compensation that are effectively used in driving a BLDC motor. This is illustrated in FIG. 5, that depicts a graph of the characteristics phase current magnitude in function of the stepping frequency Istep (motor speed).

The waveforms report the resulting phase current under voltage mode driving respectively without compensation and with BLDC standard $k \cdot f$ compensation, where $k$ factor is the electrical constant $K_E$ of the motor. It is evident that even using the $k \cdot f$ compensation, the control of the phase current is still far from acceptable, because of the large variations of the phase current at relatively low speed and of the significant reduction of the phase current when speed increases.

SUMMARY

It has been found that it is possible to drive a stepper motor in voltage mode while outstandingly reducing fluctuations of the phase current produced in the stator windings throughout the whole speed range.

This determinant result is obtained by driving a stepper motor in feed-forward voltage mode with an appropriate control characteristic.

According to the novel method, the control characteristic is such that the drive voltage of the phase windings of the stepper motor is set equal to the sum of the expected back-electromotive force (BEMF), estimated for a desired speed to be impressed to the stepper motor, and the product of a desired amplitude of phase current (Iphase) by an estimated value of the motor impedance.

According to another embodiment, the characteristic control curve is approximated by straight line segments, the first segment starting from a minimum value (Kvalmin) for speed values smaller than a pre-fixed minimum speed and increasing with a fixed slope ($\sigma_{st}$) for speed values greater than the minimum speed. The minimum value (Kvalmin), the minimum speed and the slope ($\sigma_{st}$) are pre-determined in function of nominal values of the electrical parameters of the stepper motor and of an estimated value of back-electromotive force (BEMF) induced on the stator windings.

According to yet another embodiment, the stepper motor is driven in PWM mode at a fixed switching frequency and the control characteristic determines the duty-cycle in function of the desired speed.

According to yet another embodiment, the percentage fluctuation ($\delta_{vs}$) of the supply voltage on the supply line of the stepper motor about its nominal value is estimated, and the effective phase voltage for impressing the desired speed to the stepper motor is set as the ratio between the phase voltage determined according to the above method and the estimated percentage fluctuation ($\delta_{vs}$).

According to yet another embodiment, an alarm flag is generated for signaling an in progress or imminent stall condition of the stepper motor driven in feed-forward voltage mode, by measuring the phase current absorbed by the stepper motor and comparing the measured current with a threshold, generating the alarm flag when the threshold is surpassed.

A hardware control system of a stepper motor for implementing the novel method is also disclosed.

The invention is defined in the annexed claims.

BRIEF DESCRIPTION OF THE DRAWINGS

**FIG. 1** depicts an exemplary current waveform in a load driven according to a PWM peak current control mode.

**FIG. 2** illustrates a PWM voltage mode driving of an inductive load.

**FIG. 3** compares waveforms of the current and of the back-electromotive force of a driven load in current mode vs. in voltage mode.

**FIG. 4** illustrates a circumstance in which a stall event may occur in a stepper motor driven in voltage mode because of the increasing back electromotive force.

**FIG. 5** is a sample graph of the real amplitude of the phase current in a brushless DC motor using a classic back-electromotive force compensation technique and no compensation.

**FIG. 6** illustrates a circumstance in which a stall event may occur in a stepper motor driven in voltage mode because of supply voltage fluctuations.

**FIG. 7** depicts phasors representing the voltage drops on the inductance, the resistance, the impedance of the stepper motor, the back-electromotive force and the phase voltage.

**FIG. 8** compares the exemplary graphs of FIG. 4 with similar graphs obtained with a theoretical compensation of the back-electromotive force.

**FIG. 9** compares the waveforms of the real amplitude of the phase current in a brushless DC motor using a classic back-electromotive force compensation technique and no compensation with similar waveforms obtained with an ideal implementation of the novel method.

**FIG. 10** compares three exemplary waveforms of the real amplitude of the phase current obtained with the novel method using three different transfer functions.

**FIG. 11** depicts an exemplary transfer function for determining the phase voltage in function of the motor speed.

**FIG. 12** is a high level block diagram of a circuit for implementing the novel method.

**FIG. 13** compares the waveforms of FIG. 6 with similar waveforms obtained according to the novel method by compensating supply voltage fluctuations.

**FIG. 14** is a high level block diagram of a circuit for implementing an embodiment of the novel method contemplating the compensation of supply voltage fluctuations.

**FIG. 15** illustrates how it is possible to detect an imminent or in progress stall condition if the stepper motor is driven with the novel method.

**FIG. 16** is a block diagram of a novel circuit for generating a logic flag of an imminent or in progress stall condition of a stepper motor driven according to the novel method.

**FIG. 17** is a block diagram of a PWM control circuit implementing the preferred embodiment of the novel method.

DESCRIPTION OF EXEMPLARY EMBODIMENTS

According to the novel method the BEMF voltage is compensated in order to keep constant the amplitude of the phase current when the motor speed changes.

The novel compensation technique provides for an accurate regulation of the phase current even at low speeds.

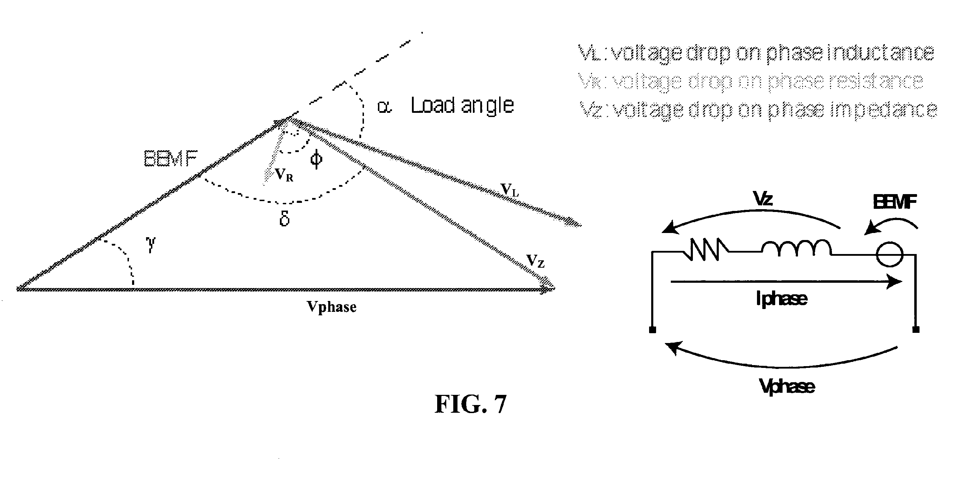

By considering the phasors depicted in FIG. 7 and using the following formulae, it is possible to calculate the voltage amplitude to apply to the motor windings in order to keep constant the amplitude of the phase current:

$$\phi = \text{atan}(\omega_{EL} \cdot L/R);$$

$$\delta = \pi - \alpha + \phi;$$

$$|V_{PHASE}|^2 = |V_z|^2 + |BEMF|^2 - 2 \cdot \cos(\delta) \cdot |V_z| \cdot |BEMF|;$$

$$I_{PHASE} = V_z / (R + i\omega_{EL}L);$$

where $V_{PHASE}$ and $I_{PHASE}$ are the phase voltage and current, $V_z$ is the voltage drop on the phase impedance, R and L the resistance and inductance of the winding, $\omega_{EL}$ the electrical frequency ($2\pi f_{step}/4$), BEMF the back electromotive force and $\alpha$ the load angle.

Using the vector formula describing the electrical model of a phase of a stepper motor:

$$V_{PHASE}(\omega_{EL}) = V_Z(\omega_{EL}) + BEMF(\omega_{EL}) = I_{PHASE} \cdot (R + i\omega_{EL}L) + BEMF(\omega_{EL})$$

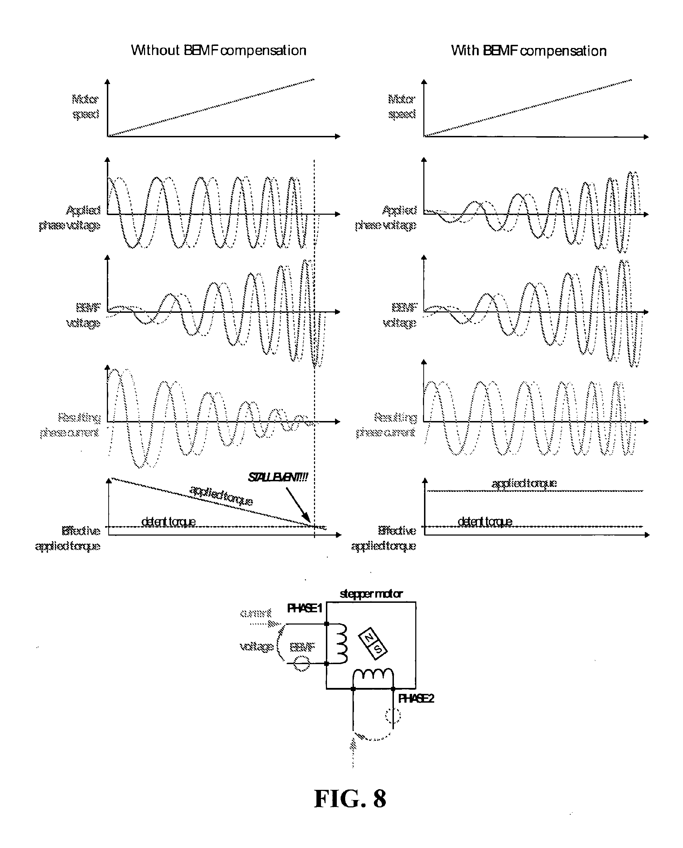

The target of an ideal compensation should consists in supplying a phase voltage $V_{PHASE}$ able to produce a constant $I_{PHASE}$ current independently from the motor speed (or equivalently $\omega_{EL}$). FIG. 8 compares time graphs of the phase current with and without compensating the back electromotive force.

The main problem for a practical implementation of such an ideal compensation consists in the not simple resolution of the above equation due to its complex nature (the term R+iωL) and the dependence of the BEMF voltage from the motor speed. Indeed, the current has a very complex dependence from the applied phase voltage, from electrical parameters of the motor and from the phase angle λ between the BEMF and the applied phase voltage:

$$I_{PHASE} = \frac{1}{R} \cdot \cos\left(\arctan\left(\omega_{EL} \cdot \frac{L}{R}\right)\right) \cdot \sqrt{\left|V_{PHASE}\right|^2 + \left|BEMF\right|^2 - \left|V_{PHASE}\right| \cdot \left|BEMF\right| \cdot \cos(\lambda)}$$

Resolving this equation, for obtaining the explicit formula of the phase voltage to be applied for various speeds, is very complex and computationally onerous.

In order to devise a simple but effective compensation method, the following relationship is considered:

$$\left|V_{PHASE}(\omega_{EL})\right| \le \left|I_{PHASE}\right| \cdot \left|R + i\omega_{EL}L\right| + \left|BEMF(\omega_{EL})\right|,$$

According to the novel method, the amplitude of the phase voltage to be applied to keep substantially constant the phase current is:

$$\left|V_{PHASE}(\omega_{EL})\right| = \left|I_{PHASE}\right| \cdot \left|R + i\omega_{EL}L\right| + \left|BEMF(\omega_{EL})\right|$$

or, more simply,

$$\left|V_{PHASE\_APPLIED}(\omega_{EL})\right| = \left|I_{PHASE\_TARGET}\right| \cdot \sqrt{R^2 + \omega_{EL}^2 L^2} + k_E \cdot \omega_{EL}$$

where $|V_{PHASE\_APPLIED}|$ is the amplitude of the sinusoidal voltage to be applied to each phase and $|I_{HASE-TARGET}|$ is the amplitude of a desired sinusoidal phase current.

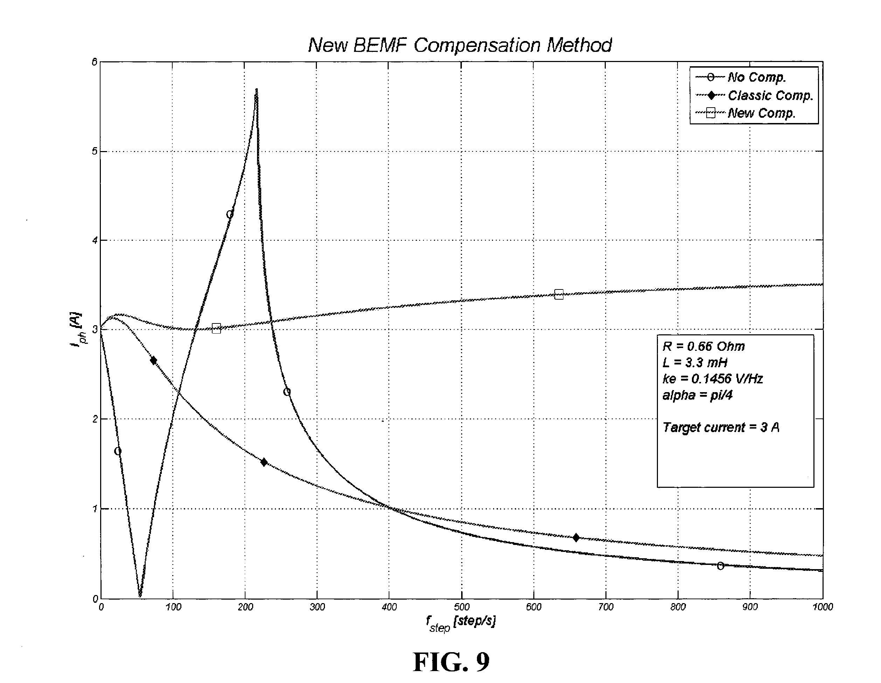

FIG. 9 shows what the resulting phase current obtained by implementing the novel compensation method would be using the above $V_{PHASE}$ vs. $I_{PHASE}$ approximated relationship: the phase current is substantially constant, as desired. Compared with the traditional $k \cdot f$ compensation technique, the novel method performs much better.

The control characteristic defined by the above formula may be implemented by a microprocessor, a DSP or any suitable digital control machine.

The illustrated embodiment of the new method used in above simulation is simple, though it still requires nonlinear operations that may take too long to be executed by a low-cost digital control system. Nevertheless a further level of approximation should be applied to the above compensation formula in order to reduce the calculation requirements for the new control system and making its implementation easier.

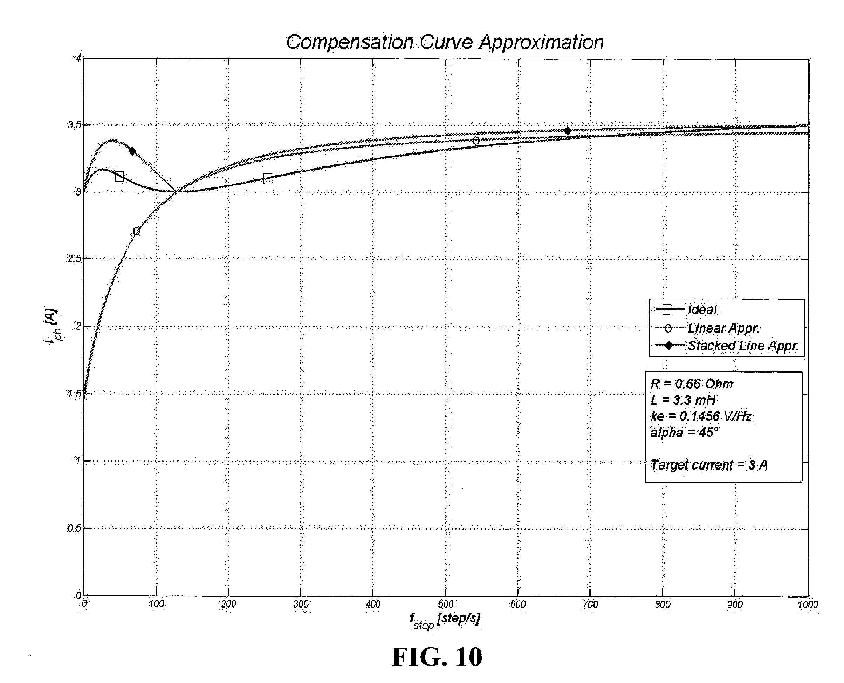

A possible approximation of the control characteristic is the linear approximation. This simplification allows to reduce phase current fluctuations in respect to the prior $k \cdot f$ approximation method in the whole range of step speed. In FIG. 10 the result of a linear approximation obtained through the method called "ordinary least squares" (OLS, best fitting algorithm) is shown.

This novel method differs from the known $k \cdot f$ approximation method because the constant $k$ is no more related only to the electrical constant of the motor, but to a "best fitting" constant given by the OLS technique, which makes it depend also on the electrical parameters (R and L) of the motor.

This solution is less preferred because the current compensation performances at low speeds are not substantially constant in the whole speed range, but are worse than at high speeds.

A more accurate fitting of the following formula:

$$\left|V_{PHASE\_APPLIED}(\omega_{EL})\right| = \left|I_{PHASE\_TARGET}\right| \cdot \sqrt{R^2 + \omega_{EL}^2 L^2} + k_E \cdot \omega_{EL}$$

may be obtained with a composition of linear approximations. According to an embodiment of the novel control method, the following relationships are used:

$$\left|V_{PHASE\_APPLIED}(\omega_{EL})\right| = \begin{cases} \left|I_{PHASE\_TARGET}\right| \cdot R + k_E \cdot \omega_{EL} & for \quad \omega_{EL} << \dfrac{R}{L} \\ \left|I_{PHASE\_TARGET}\right| \cdot \omega_{EL} L + k_E \cdot \omega_{EL} & for \quad \omega_{EL} >> \dfrac{R}{L} \end{cases}$$

FIG. 10 compares simulation results of a compensation method using a 3 points stacked line approximation for the applied phase voltage. The graph shows that this approximation offers a satisfactory result in respect to the other compensation methods.

As explained in previous paragraphs, the applied phase voltage is proportional to the duty cycle applied to the motor phase. For example, during microstepping driving, a sinusoidal duty cycle is applied to the PWM control signal. In order to control the amplitude of such sinusoidal driving signal, the amplitude of the sinusoidal duty cycle is constant (Kval value).

The amplitude of sinusoidal control signal is given by the following relationship:

$$\overline{V_{PHASE}} = V_S \cdot Kval$$

wherein $V_S$ is the supply voltage.

A way of compensating the BEMF voltage consists in acting on the amplitude of the sinusoidal voltage by varying the value Kval. The compensation factor can be simply multiplied to the original Kval value imposed by the user.

By developing the above $V_{PHASE}$ vs. $I_{PHASE}$ approximated relationship:

$$\overline{V_{PHASE}} = \left|V_{PHASE\_APPLIED}(\omega_{EL})\right| =$$

$$= \begin{cases} \left|I_{PHASE\_TARGET}\right| \cdot R + k_E \cdot \omega_{EL} = Kval_1 & for \quad \omega_{EL} << \dfrac{R}{L} \\ \left|I_{PHASE\_TARGET}\right| \cdot \omega_{EL} L + k_E \cdot \omega_{EL} = Kval_2 & for \quad \omega_{EL} >> \dfrac{R}{L} \end{cases}$$

According to another embodiment, two different Kval values are used, depending on the motor speed:

$$Kval(Speed) = \begin{cases} Kval_1(Speed) = Kval_{min} + Speed \cdot \sigma_{st} & if\,Speed \leq Speed_{int} \\ Kval_2(Speed) = Kval_{min} + Speed_{int} \cdot \sigma_{st} + Speed \cdot \sigma_{fn} & if\,Speed > Speed_{int} \end{cases}$$

where $K_{valmin}$ is the starting Kval value, Speed is the motor speed programmed by the user, $\sigma_{st}$ is the *Starting Slope*

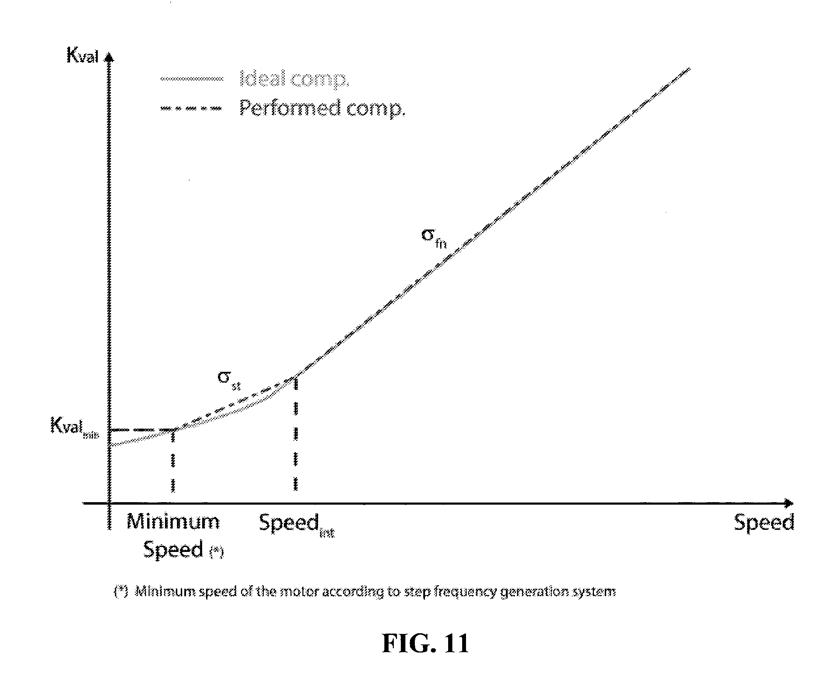

parameter, $\sigma_{fn}$ is the *Final Slope* parameter and Speed$_{inf}$ is the *Intersect Speed* parameter. FIG. 11 compares the stacked line defined by the above equation and the ideal characteristic.

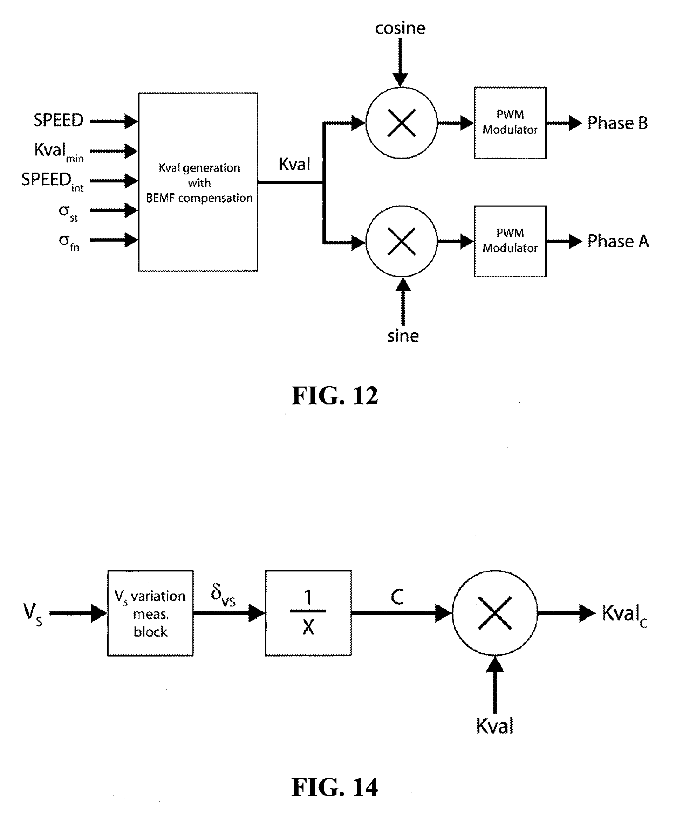

An exemplary digital circuit for generating PWM signals with a duty cycle amplitude determined according to the stacked line characteristic of FIG. 11 is shown in FIG. 12.

Different parameter values can be programmed according to motor and system characteristics and depending on the desired type of dynamic operation (torque, acceleration, speed, etc).

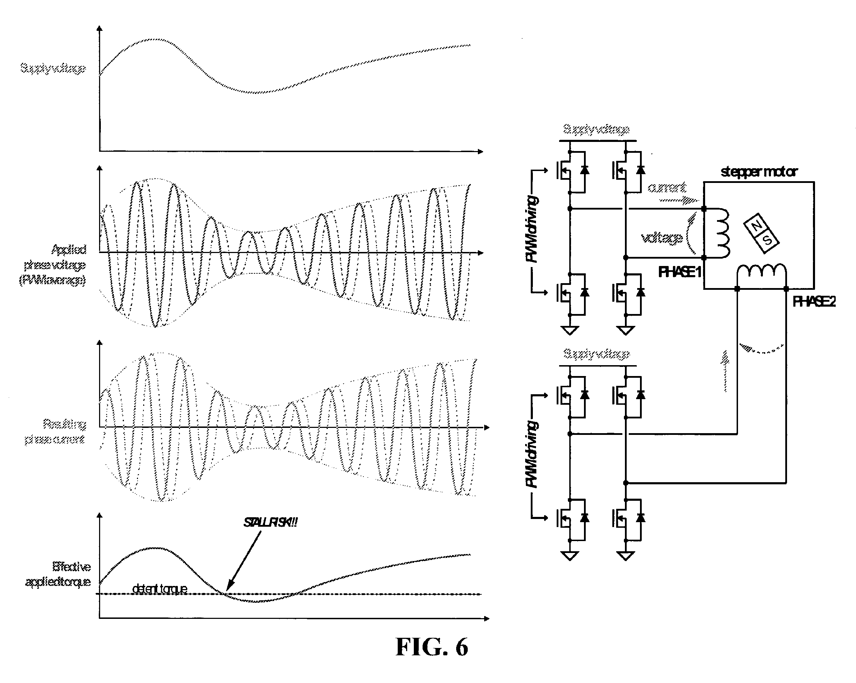

Another drawback of voltage mode driving consists in the undesired dependence of the produced torque from the supply voltage of the power bridges that drive the stepper motor, as illustrated in FIG. 6.

Numerous motor stepper drivers use power bridges to energize the phase motor inductances with a PWM switching technique to modulate energy in a desired way. By regulating the duty cycle of each half bridge is possible to control the average phase voltage in a PWM switching period. In case of voltage mode approach, the applied average voltage is directly proportional to the effective duty cycle applied to each power full bridge and the power stage supply voltage. This means that, if the supply voltage was constant, the control of the average phase voltage would be very easy to implement at controller level.

Unfortunately, in most of real motor applications, the supply voltage is not well regulated and it may undergo to significant voltage fluctuations, due to various factors, for example to fluctuations of load conditions of a voltage regulator that delivers the supply voltage of the motor. The effect of supply voltage fluctuations is shown in FIG. 6: the dependence of average phase voltage on both supply voltage and duty cycle produces an undesired amplitude modulation in typical sinusoidal waveforms that causes undesired variations of the produced torque. Therefore, the torque is not constant but depends on the supply voltage. This dependence may have a double negative impact:

- torque fluctuations may cause acoustic noise and vibration in resonance with supply voltage fluctuations, and

- any drop of the supply voltage may cause a corresponding drop of the produced torque, that could attain the value of the detent torque of the driven motor thus risking to loose steps and/or stalling the stepper motor.

Considering that the average phase voltage is proportional to the motor supply voltage ($V_S$), any variation of the supply voltage from its nominal value ($V_{S,nom}$) affects the system performances. In terms of Kval:

$$\overline{V_{PHASE}} = V_S \cdot Kval = (V_{S,nom} + \Delta V_S) \cdot Kval$$

Motor supply voltage variation can be expressed by a coefficient $\delta_{VS}$:

$$V_S = (V_{S,nom} + \Delta V_S) = V_{S,nom} \cdot \left(1 + \frac{\Delta V_S}{V_{S,nom}}\right) = V_{S,nom} \cdot \delta_{VS}$$

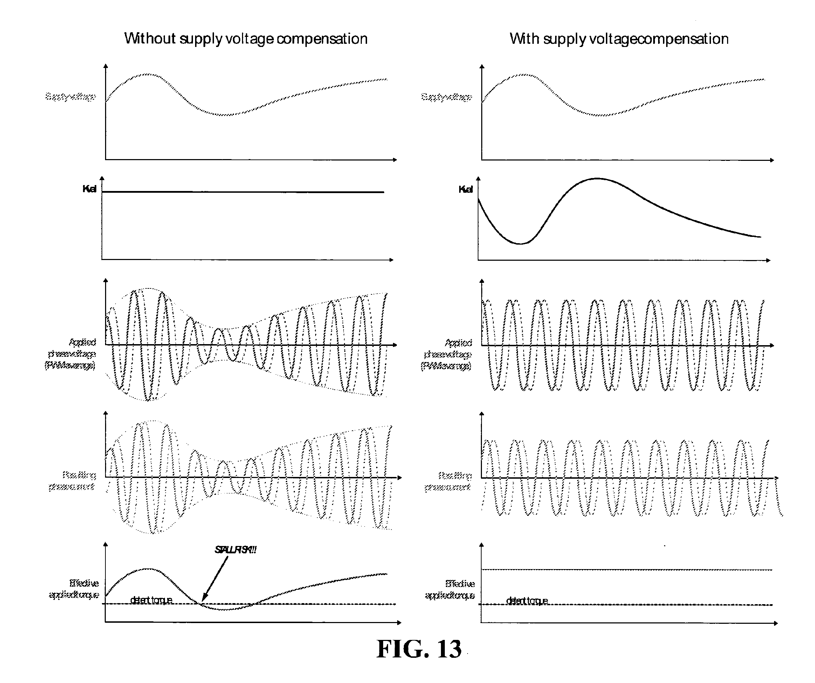

According to another embodiment of the novel voltage mode driving method, the parameter Kval is varied as depicted in FIG. 13. The parameter $\delta_{VS}$ is compensated multiplying Kval by a compensation coefficient C. The coefficient C is obtained as the reciprocal of $\delta_{VS}$, for example as schematically illustrated by the block diagram of FIG. 14 depicting an exemplary control line.

Resulting Kval value (Kval$_C$) is applied to motor phase:

$$\overline{V_{PHASE}} = \underline{V_S \cdot Kval_C} = (V_{S,nom} \cdot \delta_{VS}) \cdot (Kval \cdot C) =$$

$$= (V_{S,nom} \cdot \delta_{VS}) \cdot \left(Kval \cdot \frac{1}{\delta_{VS}}\right) = \underline{V_{S,nom} \cdot Kval}$$

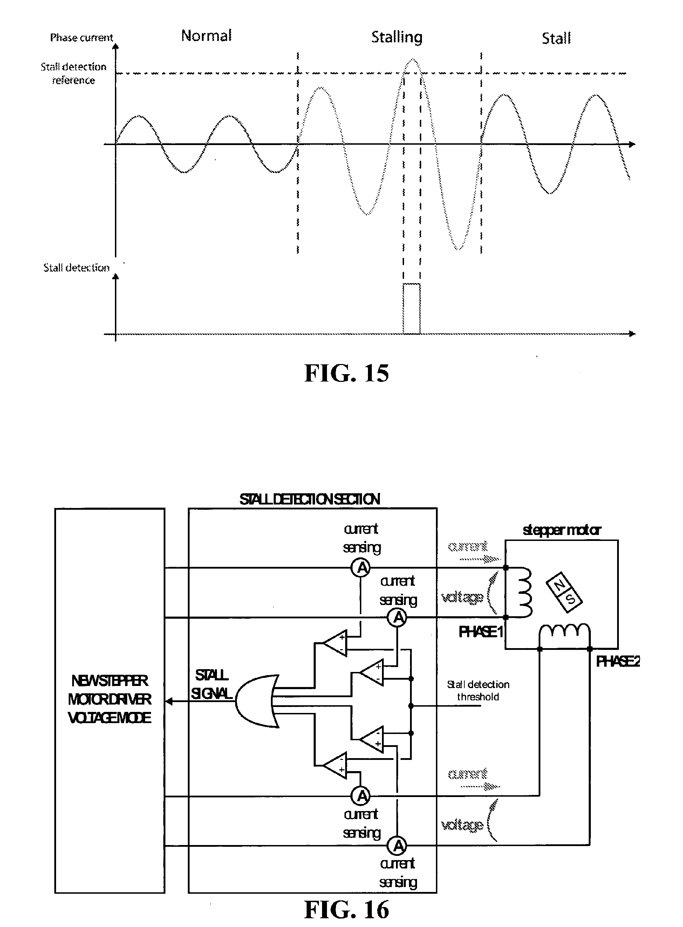

When a stepper motor driven in voltage mode is near to stall (step loss), the current in its phases rapidly increases. This is due to the fact that the BEMF voltage is proportional to the motor speed and is null when the motor is at rest. When a stall event is imminent or in progress, the phase current abruptly increases, as shown in FIG. 15, and this effect could be used to detect stall conditions. Using a programmable comparator is possible to sense this overelongation and to inform the host processor of a possible or incoming stall event. A system capable of detecting motor stall conditions caused by excessive mechanical load (and/or insufficient current) without using any speed sensor is depicted in FIG. 16.

Analog current comparators may be used to detect when currents through the windings exceed the normal operative range.

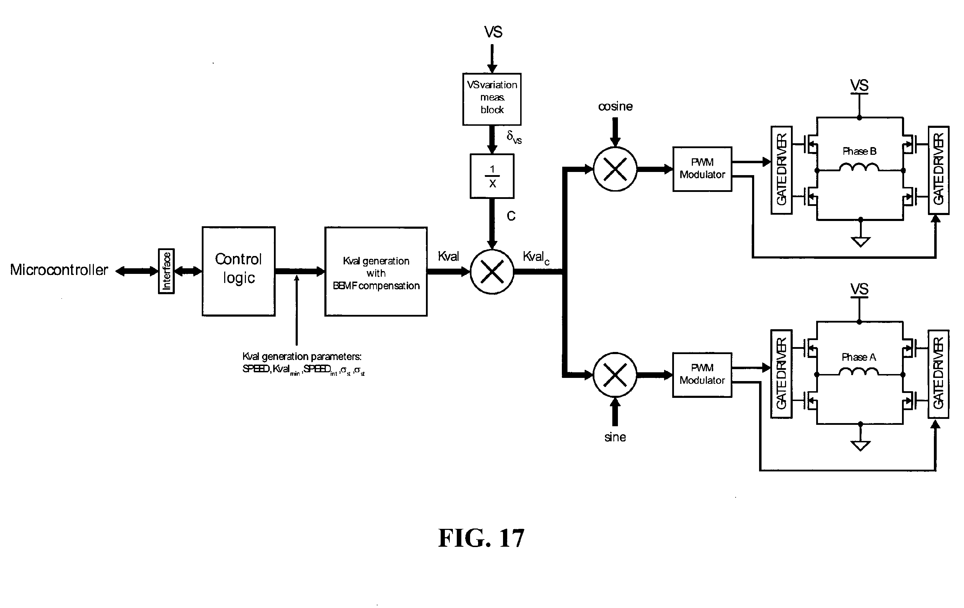

FIG. 17 depicts a block diagram of the proposed control system. The meaning of each functional block will appear per se clear from the above description and for this reason it will not be illustrated in detail.

The novel driving technique for stepper motors performs very good both in static conditions, in terms of accuracy of rotor positioning, as well as in dynamic conditions, for example in terms of high smoothness and very low noise during motor rotation, optimized torque performances at high speed.

Moreover, using the novel control method and system it is possible to detect an imminent or in progress stall condition without using position or speed sensors.

The novel control technique provides the great positioning accuracy typical of stepper motors with the dynamic performances and smoothness typical of common DC motors. The practical implementation of the new motor control system requires a very simple architecture. Indeed, thanks to a reduction of the number of analog blocks, that are typically required in known stepper drivers, the novel control method may be implemented by a fully digital control system.

**Claims**

1. A method of driving a stepper motor in feed-forward voltage mode, comprising the step of:

   for a desired speed to be impressed to the stepper motor, setting the amplitude of a sinusoidal phase voltage of the stepper motor equal to the sum of the expected back-electromotive force (BEMF) amplitude estimated in function of the desired speed, and the product between a desired amplitude of a phase current (Iphase) and an estimated absolute value of the motor impedance.

2. The method of claim 1, comprising the step of:

   for a desired speed to be impressed to the stepper motor, setting the amplitude of the sinusoidal phase voltage of the stepper motor according to a transfer function that assumes a minimum value (Kvalmin) for speed values smaller than a minimum speed and that increases with a fixed slope ($\sigma_{st}$) for speed values larger than said minimum speed, said minimum value (Kvalmin), minimum speed and said slope ($\sigma_{st}$) being pre-determined in function of nominal values of electrical parameters of the stepper motor and of an estimation of back-electromotive force (BEMF) amplitude induced in windings of the motor.

3. The method of claim 1 or 2, comprising the steps of:

   driving in PWM mode said stepper motor at a fixed frequency, where the duty cycle is proportional to said sinusoidal phase voltage.

4. The method of claim 2, wherein for speed values larger than a second speed threshold (Speed$_{int}$) and higher than said minimum speed, said transfer function increases with a second fixed slope ($\sigma_{fn}$) steeper than said first slope ($\sigma_{st}$).

5. The method of claim 3, further comprising the steps of setting the duty-cycle of the PWM driving for impressing the desired speed to the stepper motor as the ratio between the duty-cycle determined according to claim 3 and to a measured percentage fluctuation ($\delta_{vs}$) of the voltage effectively supplied to the stepper motor in respect to its nominal value.

6. A method of generating an alarm flag of an imminent or in progress stall condition of the stepper motor driven in feed-forward voltage mode according to the method of claim 1, comprising:

   comparing the phase current with a threshold, generating said alarm flag when said threshold is surpassed.

7. A system for driving a stepper motor in feed-forward voltage mode, comprising:

   a power stage adapted to energize windings of said stepper motor,

a control circuit input with a command representing a speed value to be impressed to the stepper motor, adapted to generate control signals of said power stage for making said stepper motor rotate at said speed to be impressed, **characterized in that** said control circuit is adapted to generate said control signals such to set the amplitude of sinusoidal phase voltage of the stepper motor according to the method of claim 1.

**8.** The system of claim 7, further including a circuit adapted to generate an alarm flag of an imminent or in progress stall condition of the stepper motor comprising:

at least a current sensor generating a sense signal representative of a phase current of the stepper motor;
at least a comparator of said sense signal with a threshold, adapted to generate said alarm flag when said threshold is surpassed.

**Patentansprüche**

**1.** Verfahren zum Betreiben eines Schrittmotors in einer Vorwärtsregelungsspannungsbetriebsart, das den Schritt aufweist:

für eine Solldrehzahl, die dem Schrittmotor eingeprägt werden soll, Einstellen der Amplitude einer sinusförmigen Phasenspannung des Schrittmotors gleich der Summe der Amplitude der als Funktion der Solldrehzahl berechneten erwarteten gegenelektromotorischen Kraft (BEMF) und dem Produkt zwischen einer Sollamplitude eines Phasenstroms (Iphase) und eines berechneten Absolutwerts der Motorimpedanz.

**2.** Verfahren nach Anspruch 1, das den Schritt aufweist:

für eine Solldrehzahl, die dem Schrittmotor eingeprägt werden soll, Einstellen der Amplitude der sinusförmigen Phasenspannung des Schrittmotors entsprechend einer Übertragungsfunktion, die für Drehzahlwerte, die kleiner als eine Minimaldrehzahl sind, einen Minimalwert (Kvalmin) annimmt und die für Drehzahlwerte, die größer als die Minimaldrehzahl sind, mit einer festen Steigung ($\sigma_{st}$) zunimmt, wobei der Minimalwert (Kvalmin), die Minimaldrehzahl und die Steigung ($\sigma_{st}$) als Funktion der Nennwerte elektrischer Parameter des Schrittmotors und einer Berechnung der Amplitude der gegenelektromotorischen Kraft (BEMF) vorgegeben sind, die in den Windungen des Motors induziert wird.

**3.** Verfahren nach Anspruch 1 oder 2, das die Schritte aufweist:

Betreiben des Schrittmotors in einer PWM-Betriebsart mit einer festen Frequenz, wobei das Tastverhältnis proportional zur sinusförmigen Phasenspannung ist.

**4.** Verfahren nach Anspruch 2, wobei für Drehzahlwerte, die größer als eine zweite Drehzahlschwelle (Speed$_{int}$) und höher als die Minimaldrehzahl sind, die Übertragungsfunktion mit einer zweiten festen Steigung ($\sigma_{fn}$) zunimmt, die steiler als die erste Steigung ($\sigma_{st}$) ist.

**5.** Verfahren nach Anspruch 3, das ferner die Schritte aufweist: Einstellen des Tastverhältnisses der PWM-Ansteuerung zum Einprägen der Solldrehzahl in den Schrittmotor als das Verhältnis zwischen dem nach Anspruch 3 bestimmten Tastverhältnis und einer gemessenen prozentualen Fluktuation ($\delta_{vs}$) der Spannung, die dem Schrittmotor effektiv zugeführt wird, bezüglich ihres Nennwerts.

**6.** Verfahren zum Erzeugen eines Alarmmerkers eines drohenden oder im Gang befindlichen Überlastungszustands des Schrittmotors, der in der Vorwärtsregelungsspannungsbetriebsart betrieben wird, gemäß dem Verfahren nach Anspruch 1, das aufweist:

Vergleichen des Phasenstroms mit einem Schwellenwert,
Erzeugen des Alarmmerkers, wenn der Schwellenwert überschritten wird.

**7.** System zum Betreiben eines Schrittmotors in einer Vorwärtsregelungsspannungsbetriebsart, mit:

einer Leistungsstufe, die eingerichtet ist, die Wicklungen des Schrittmotors zu erregen,
einer Regelschaltung, in die ein Befehl eingegeben wird, der einen Drehzahlwert repräsentiert, der dem Schrittmotor eingeprägt werden soll, die eingerichtet ist, Regelsignale der Leistungsstufe zu erzeugen, um zu bewirken, daß sich der Schrittmotor mit der Drehzahl dreht, die eingeprägt werden soll, **dadurch gekennzeichnet, daß** die Regelschaltung eingerichtet ist, die Regelsignale so zu erzeugen, daß die Amplitude der sinusförmigen Phasenspannung des Schrittmotors gemäß dem Verfahren nach Anspruch 1 eingestellt wird.

8.  System nach Anspruch 7, das ferner eine Schaltung aufweist, die eingerichtet ist, einen Alarmmerker eines drohenden oder im Gang befindlichen Überlastungszustands des Schrittmotors zu erzeugen, die aufweist:

mindestens einen Stromsensor, der ein Abtastsignal erzeugt, das für einen Phasenstrom des Schrittmotors repräsentativ ist;
mindestens einen Komparator des Abtastsignals mit einem Schwellenwert, der eingerichtet ist, den Alarmmerker zu erzeugen, wenn der Schwellenwert überschritten wird.

**Revendications**

1.  Procédé de commande d'un moteur pas à pas en tension en boucle ouverte comprenant l'étape suivante :

pour une vitesse désirée à impartir au moteur pas à pas, régler l'amplitude d'une tension de phase sinusoïdale du moteur pas à pas à une valeur égale à la somme de l'amplitude de la force contre-électromotrice (BEMF) estimée en fonction de la vitesse désirée et du produit entre une amplitude désirée d'un courant de phase (Iphase) et une valeur absolue estimée de l'impédance du moteur.

2.  Procédé selon la revendication 1, comprenant l'étape suivante :

pour une vitesse désirée à impartir au moteur pas à pas, régler l'amplitude d'une tension de phase sinusoïdale du moteur pas à pas en fonction d'une fonction de transfert qui prend une valeur minimale (Kvalmin) pour des valeurs de vitesse inferieures à une vitesse minimum et qui augmente avec une pente déterminée ($\sigma_{st}$) pour des valeurs de vitesse supérieures à la vitesse minimum, la valeur minimum (Kvalmin), la vitesse minimum et la pente ($\sigma_{st}$) étant prédéterminées en fonction des valeurs nominales des paramètres électriques du moteur pas à pas et d'une estimation de l'amplitude de la force contre-électromotrice (BEMF) induite dans les enroulements du moteur.

3.  Procédé selon la revendication 1 ou 2, comprenant l'étape suivante :

piloter en mode PWM le moteur pas à pas à une fréquence fixe, le rapport cyclique étant proportionnel à la tension de phase sinusoïdale.

4.  Procédé selon la revendication 2, dans lequel pour des valeurs de vitesse supérieures à un second seuil de vitesse (Speed$_{int}$) et supérieures à la vitesse minimum, la fonction de transfert augmente avec une seconde pente déterminée ($\sigma_{fn}$) plus raide que la première pente ($\sigma_{st}$).

5.  Procédé selon la revendication 3, comprenant en outre les étapes de fixation du rapport cyclique de la commande PWM pour impartir la vitesse désirée au moteur pas à pas en tant que rapport entre le rapport cyclique déterminé selon la revendication 3 et une fluctuation en pourcentage mesurée ($\delta_{vs}$) de la tension effectivement fournie au moteur pas à pas par rapport à sa valeur nominale.

6.  Procédé de génération d'un drapeau d'alarme d'une condition de blocage imminente ou en cours du moteur pas à pas piloté en tension en boucle ouverte selon le procédé de la revendication 1, comprenant :

comparer le courant de phase à un seuil et produire le drapeau d'alarme quand le seuil est dépassé.

7.  Système de pilotage d'un moteur pas à pas en mode de tension en boucle ouverte, comprenant :

un étage de puissance adapté à alimenter des enroulements du moteur pas à pas,
une entrée de circuit de commande par une commande représentant une valeur de vitesse à impartir au moteur pas à pas, adaptée à produire des signaux de commande de l'étage de puissance pour amener le moteur pas à pas à tourner à ladite vitesse à lui impartir, **caractérisé en ce que** le circuit de commande est adapté à produire des signaux de commande de façon à fixer l'amplitude de la tension de phase sinusoïdale du moteur pas à pas selon le procédé de la revendication 1.

8. Système selon la revendication 7, comprenant en outre un circuit adapté à produire un drapeau d'alarme d'une condition de blocage imminente ou en cours du moteur pas à pas comprenant :

au moins un détecteur de courant fournissant un signal de détection représentatif d'un courant de phase du moteur pas à pas ;
au moins un comparateur du signal de détection à un seuil, adapté à produire le drapeau d'alarme quand le seuil est dépassé.

**FIG. 1**

**FIG. 2**

FIG. 3

EP 2 251 972 B1

**FIG. 4**

$$|BEMF| = K_E \cdot f_E$$

FIG. 5

**FIG. 6**

FIG. 7

Without BEMF compensation                    With BEMF compensation

FIG. 8

FIG. 9

Compensation Curve Approximation

FIG. 10

(*) Minimum speed of the motor according to step frequency generation system

**FIG. 11**

**FIG. 12**

**FIG. 14**

FIG. 13

**FIG. 15**

**FIG. 16**

**FIG. 17**

EP 2 251 972 B1